# EUROPEAN PATENT APPLICATION

(11) **EP 1 970 229 A1**
(43) Date of publication of application: **17.09.2008**
(21) Application number: 08250826.8
(22) Date of filing: 11.03.2008
(51) Int. Cl.: B60G 17/052

(54) **Control unit for suspension using single pressure sensor**

(30) Priority: 14.03.2007 US 685864
(71) Applicant: ArvinMeritor Technology, LLC, Troy, Michigan 48084 (US)
(72) Inventor: Smith, Mark C., Troy, Michigan 48084 (US); Maleki, Ali Fani, Canton, Michigan 48187 (US); Caron, Vern A., Kalamazoo, Michigan 49009 (US)
(74) Representative: Foot, Paul Matthew James

(57) **Abstract**

A vehicle suspension includes a plurality of pneumatic suspension elements with each pneumatic suspension element being associated with one pneumatic control valve. A common manifold is fluidly connected to each of the pneumatic control valves. The manifold includes a supply valve that is connected to an air supply, an exhaust valve, and a single pressure sensor. The single pressure sensor is used to measure a pressure level at each of the pneumatic suspension elements. A controller cooperates with the manifold to individually adjust pressure levels of each of the pneumatic suspension elements based on the individually sensed pressure levels. The controller can use the sensed pressure levels to adjust suspension ride height, identify system leaks and isolate defective suspension elements, identify uneven pressure distribution, and to determine a load supported on the pneumatic suspension elements.

## Description

### TECHNICAL FIELD

The subject invention generally relates to a method and apparatus for adjusting a pneumatic suspension, including providing a control unit with a single pressure sensor for a plurality of pneumatic suspension elements.

### BACKGROUND OF THE INVENTION

Vehicles can be configured to utilize different types of suspensions including mechanical leaf spring suspensions, pneumatic suspensions, and active or semiactive suspensions, for example. Each type of suspension has certain advantages/disadvantages for associated vehicle applications. Certain types of suspensions are more suitable for certain vehicle applications than others. For example, mechanical suspensions for military applications are robust and can operate reliably under harsh environmental conditions, but often do not provide desired ride and performance characteristics. Pneumatic suspensions provide more desirable ride characteristics but are relatively new to military vehicle applications. Pneumatic suspensions use a pressurized air source to supply air to a plurality of pneumatic suspension elements, such as air springs for example. Supply and control of air flow in such a configuration is critical to maintaining desired system performance. A single failure, such as a leak for example, in an air supply configuration can affect overall system integrity rendering a vehicle inoperable.

Traditionally, air suspension systems are controlled with simple pneumatic valves. A control arm is attached to a linkage. The linkage is adjusted so that the valve supplies air to the air bags when the distance between the chassis and the suspended elements is below a set point and air is vented from the air bags when the distance exceeds the set point. The valve is built with an amount of hysteresis around the set point that is sufficient to limit air consumption.

Although these systems are simple and robust, they have limitations. They operate with only a single height setting and this must be manually calibrated by adjusting the valve linkages.

Electronically controlled air suspension systems can operate with variable suspension heights in response to drive command or vehicle operating conditions. Sensor linkage adjustment is not required provided that at some point the suspension is placed in a known position, for example against the bump stops, that the controller can use as a reference point to derive the height sensor calibrations. A further advantage of an electronic controlled system is to provide improved diagnostics and fault response.

### SUMMARY OF THE INVENTION

A method and apparatus for adjusting a suspension includes providing a plurality of pneumatic suspension elements, a plurality of pneumatic control valves, and a manifold. Each pneumatic suspension element is associated with one pneumatic control valve. The manifold includes a supply valve to be fluidly connected to an air supply, an exhaust valve, and a single pressure sensor. The manifold is fluidly connected to each of the plurality of pneumatic control valves such that the supply valve can supply air to, and the exhaust valve can exhaust air from, the pneumatic suspension elements via an associated one of the pneumatic control valves.

The single pressure sensor is used to determine individual pressure levels for each pneumatic suspension element. Pressure at each pneumatic suspension element can be individually controlled via the manifold and a respective one of the plurality of pneumatic control valves based on a respective sensed pressure level for each pneumatic suspension element. A control unit generates control signals to vary pressure as needed to adjust suspension ride height The control unit can also identify system leaks or determine a load supported on the pneumatic suspension elements based on sensed pressure levels of each of the pneumatic suspension elements.

In one disclosed example, each pneumatic control valve is normally in a closed position. This isolates each pneumatic suspension element such that a failure or leak of one of the pneumatic suspension elements does not affect the performance of the remaining pneumatic suspension elements.

The subject invention provides a cost effective method and apparatus for determining individual pressure levels for each pneumatic suspension element such that pressure levels can be varied as needed to satisfy various operating parameters.

These and other features of the present invention can be best understood from the following specification and drawings, the following of which is a brief description.

### BRIEF DESCRIPTION OF THE DRAWINGS

Figure 1 is a schematic diagram of a control system for adjusting pneumatic suspension pressures.
Figure 2 is a schematic view of a manifold as used in the control system of Figure 1.
Figure 3A is a perspective view of one side of the manifold of Figure 2.
Figure 3B is a perspective view of an opposite side of the manifold of Figure 3A.

### DETAILED DESCRIPTION OF THE PREFERRED EMBODIMENT

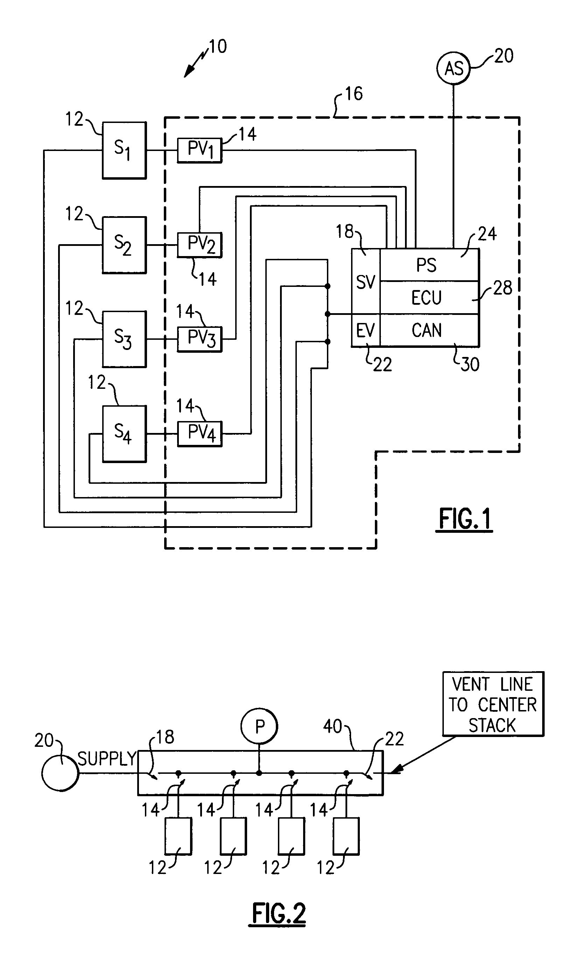

A suspension for a vehicle, such as a military vehicle for example, is shown generally at 10 in Figure 1. The suspension 10 includes a plurality of pneumatic suspension elements 12, such as air springs for example. In the example configuration shown, four (4) air springs S1-4 are shown, however, fewer or additional air springs could be utilized in the suspension 10 as needed.

Each pneumatic suspension element 12 is associated with one pneumatic control valve 14. In the example shown, the pneumatic control valves 14 comprise solenoid valves, however, other types of valves could also be used. The pneumatic control valves 14 are normally in a closed position such that each pneumatic suspension element 12 is isolated from other pneumatic suspension elements 12. Thus, a failure or leak of one of the pneumatic suspension elements 12 does not affect the performance of the remaining pneumatic suspension elements 12.

A manifold 16 is in fluid communication with each of the pneumatic suspension elements 12 via the pneumatic control valves 14. In the example shown, the manifold 16 includes a supply valve 18 fluidly connected to an air supply 20, an exhaust valve 22, a single pressure sensor 24, and the pneumatic control valves 14. In the example shown, the exhaust valve 22 and the supply valve 18 are solenoid valves, and the pressure sensor comprises a pressure transducer; however other types of valves and sensors could also be used.

The pressure sensor 24 is used to measure a pressure level of each of the pneumatic suspension elements 12. Each pneumatic control valve 14 is systematically opened to check, measure, and/or monitor pressure of the respective pneumatic suspension element 12. These checks can be periodic checks performed at specified time intervals, and/or can be performed in response to certain operational events or circumstances.

The manifold 16 also includes a controller or electronic control unit (ECU) 28 and a communications bus 30, such as a controller area network (CAN) bus for example. The ECU 28 reads pressures from the pressure sensor 24; controls the pneumatic control valves 14, exhaust valve 22, and supply valve 18; and communicates to the CAN bus 30 using a J1939 protocol for example.

The manifold 16 forms a compact unit that can be easily installed at various locations within a vehicle. If a vehicle requires more than one set of pneumatic devices (e.g. a set of pneumatic suspension elements), a manifold 16 can be placed adjacent each set of pneumatic devices. This would avoid a central approach for controlling multiple pneumatic devices, which has the disadvantage of requiring long air lines for connections to pneumatic elements. Further, the manifold configuration has the advantage of providing more flow area to each pneumatic device.

The ECU 28 can be programmed with software to provide diagnostic routines that can be utilized to detect leaks or uneven pressure distribution amongst the pneumatic suspension elements 12. Thus, any potential loss of function due to spring damage or leaks can be readily identified. Additionally, the ECU 28 can be programmed to determine a load supported by the pneumatic suspension elements 12 based on pressure levels sensed in each of the pneumatic suspension elements 12.

As discussed above, the ECU 12 is programmed to systematically and individually check the pressure levels of each of the pneumatic suspension elements 12. This is accomplished by opening only one of the pneumatic control valves 14 at a time such that the pressure sensor 24 can measure the pressure level for the associated pneumatic suspension element 12. Thus, a single and common pressure sensor 24 is used to monitor and measure the individual pressure levels for all of the pneumatic suspension elements 12. Additionally, the pressure sensor 24 can be used to check pressure at the air supply by opening the supply valve 18, and can even check ambient pressure if needed by opening the exhaust valve 22. The use of a single pressure sensor 24 results in significant cost reductions, improved suspension performance, and improved packaging configurations compared to prior configurations.

The function of the controller is to adjust suspension ride height. The ECU 28 determines the current suspension ride height by reading suspension height sensors mounted at critical points on the vehicle. This current suspension ride height can be compared to a commanded value and/or can be used in combination with vehicle application and/or load information to determine whether or not suspension ride height should be adjusted.

To adjust suspension ride height, the ECU 28 generates one or more control signals to exhaust air from, or supply air to, the individual pneumatic suspension elements 12 as needed. To supply air to a pneumatic suspension element, the ECU 28 would open the associated pneumatic control valve 14 and the supply valve 18 to allow air to flow into the pneumatic suspension element 12 from the air supply 20. Air can be exhausted from the pneumatic suspension element 12 by opening the associated pneumatic control valve 14 and exhaust valve 22. Typically, air is supplied to pneumatic suspension elements 12 to increase ride height, and air is exhausted to decrease ride height. Air is supplied or exhausted from a pneumatic suspension element 12 until a desired pressure level, measured by the pressure sensor 24, is achieved.

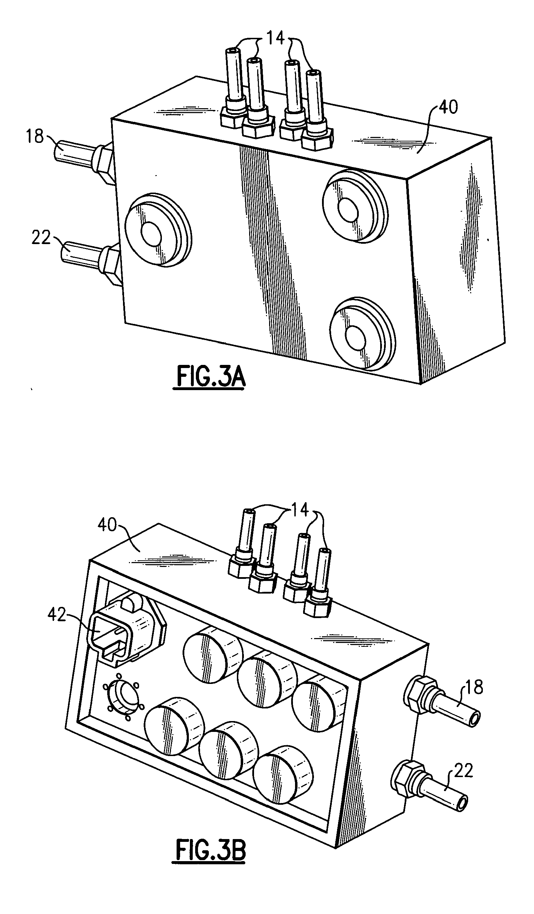

The manifold configuration is shown more clearly in Figures 2 and 3A-3B. In this example configuration, the manifold includes a housing 40 with six (6) solenoid valves, i.e. the four (4) pneumatic control valves 14, the supply valve 18, and the exhaust valve 22. The pressure sensor 24 is in fluid combination with each of the valves. The housing includes a connection interface 42 to provide power to the ECU 28 and associated components.

Optionally, additional pressure sensors could be used that would operate in conjunction with a plurality of control valves. For example, if a system included eight control valves, two pressure sensors could be used with each pressure sensor being associated with four of the control valves.

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A vehicle suspension comprising:
a plurality of pneumatic suspension elements;
a plurality of pneumatic control valves, with each pneumatic suspension element being associated with one of said plurality of pneumatic control valves;
a manifold including a supply valve to be fluidly connected to an air supply, an exhaust valve, and a single pressure sensor configured to determine individual pressure levels for a plurality of said pneumatic suspension elements, said manifold providing fluid connections to each of said plurality of pneumatic control valves; and
a controller that cooperates with said manifold to individually supply air to each pneumatic suspension element via said supply valve and a respective one of said plurality of pneumatic control valves based on a respective sensed pressure level for each pneumatic suspension element.

2. The vehicle suspension according to claim 1 wherein said controller systematically checks pressure at each pneumatic suspension element by opening an associated one of said plurality of pneumatic control valves, such that said single pressure sensor can measure individual pressure levels for a plurality of said pneumatic suspension elements.

3. The vehicle suspension according to claim 2 wherein said single pressure sensor generates a plurality of pressure signals with each pressure signal representing a sensed pressure level of one of said plurality of pneumatic suspension elements.

4. The vehicle suspension according to claim 3 wherein said controller generates at least one control signal to individually adjust suspension ride height at each pneumatic suspension element based on an associated one of said plurality of pressure signals.

5. The vehicle suspension according to claim 4 wherein
said plurality of pneumatic suspension elements comprises at least a first pneumatic suspension element and a second pneumatic suspension element;
said plurality of pneumatic control valves includes at least a first pneumatic control valve fluidly connected to said first pneumatic suspension element and a second pneumatic control valve fluidly connected to said second pneumatic suspension element;
said plurality of pressure signals includes at least a first pressure signal representative of a first pressure level of said first pneumatic suspension element and
a second pressure signal representative of a second pressure level of said second pneumatic suspension element; and
wherein said at least one control signal comprises
a first control signal that supplies or exhausts air via said first pneumatic control valve to adjust a pressure level of said first pneumatic suspension element based on said first pressure signal; and
a second control signal that supplies or exhausts air via said second pneumatic control valve to adjust a pressure level of said second pneumatic suspension element based on said second pressure signal.

6. The vehicle suspension according to claim 2 wherein said supply valve, said exhaust valve, and said plurality of pneumatic control valves comprise solenoid valves.

7. The vehicle suspension according to claim 2 wherein said plurality of pneumatic control valves are incorporated into said manifold.

8. The vehicle suspension according to claim 2 including a communications bus associated with said controller for communication with said single pressure sensor and for communicating control signals generated by said controller to each of said plurality of pneumatic control valves.

9. The vehicle suspension according to claim 1 wherein said controller systematically checks pressure at each pneumatic suspension element to identify possible leaks.

10. A method for adjusting pneumatic suspension pressure comprising the steps of:
(a) providing a plurality of pneumatic suspension elements, a plurality of pneumatic control valves, with each pneumatic suspension element being associated with one pneumatic control valve, and
a manifold including the plurality of pneumatic control valves, a supply valve to be fluidly connected to an air supply, an exhaust valve, and a single pressure sensor;
(b) determining individual pressure levels for said plurality of pneumatic suspension elements with the single pressure sensor; and
(c) individually controlling a pressure of each pneumatic suspension element via the manifold and a respective one of the plurality of pneumatic control valves based on a respective sensed pressure level for each pneumatic suspension element.

11. The method according to claim 10 wherein step (b) includes systematically checking pressure at each pneumatic suspension element by opening an associated one of the plurality of pneumatic control valves and measuring a pressure level for that pneumatic suspension element.

12. The method according to claim 11 including opening only one of the plurality of pneumatic control valves at a time.

13. The method according to claim 11 including generating a plurality of discrete pressure signals with each pressure signal representing a sensed pressure level of one of the plurality of pneumatic suspension elements.

14. The method according to claim 11 including
generating a first set of pressure signals at a first time interval with each pressure signal from the first set of pressure signals representing a sensed pressure level of one of the plurality of pneumatic suspension elements;
generating a second set of pressure signals at a second time interval, subsequent to the first time interval, with each pressure signal from the second set of pressure signals representing a sensed pressure level of one of the plurality of pneumatic suspension elements;
comparing the first set of pressure signals to the second set of pressure signals; and
individually adjusting a pressure of each of the pneumatic suspension elements as needed based on the comparison between the first and second sets of pressure signals.

15. The method according to claim 14 including identifying any system leaks by comparing the first and second sets of pressure signals.

16. The method according to claim 13 including determining a load supported by the plurality of pneumatic suspension elements based on the plurality of discrete pressure signals.
